# EUROPEAN PATENT SPECIFICATION

(11) **EP 2 325 456 B1**
(45) Date of publication and mention of the grant of the patent: **27.01.2016**
(21) Application number: 09014452.8
(22) Date of filing: 19.11.2009
(51) Int. Cl.: F02C 3/34, F02C 1/10, F22B 1/00, F02C 6/18, F02C 7/08, F01K 21/04, F02C 3/30

(54) **Gas turbine cycle with water injection for generating electricity**
Gasturbinenprozess mit Wassereinspritzung zur Stromerzeugung
Cycle de turbine à gaz avec injection d'eau pour la production d'énergie électrique

(43) Date of publication of application: 25.05.2011
(73) Proprietor: Smith, Douglas Wilbert Paul, Port Coquitlam, British Columbia V3B 3R6 (CA)
(72) Inventor: Smith, Douglas Wilbert Paul, Port Coquitlam, British Columbia V3B 3R6 (CA)
(74) Representative: Brophy, David Timothy

(56) References cited:
- EP-A1- 0 859 136
- EP-A2- 1 362 984
- WO-A1-2004/083615
- DE-A1- 19 651 645
- US-A1- 2002 108 371
- US-A1- 2005 097 881
- US-B1- 6 321 539

## Description

### TECHNICAL FIELD OF THE INVENTION

This invention relates to the field of electricity generation using a modified form of the thermodynamic power cycle known as the Brayton cycle, conventionally used in gas turbines and jet engines.

### BACKGROUND OF THE INVENTION

Gas turbines used for power generation are designed over a wide range of power outputs and with a variety of configurations and operating conditions. They operate using the Brayton cycle which is a single-phase vapor power cycle. Typical systems are open-loop using atmospheric air as the working fluid. In the Brayton cycle air is compressed then fuel is added and combusted then the combined air and combustion gases are expanded through a turbine. A portion of the work produced by the turbine is used for compression of the incoming air with the balance of the turbine work being made available as net output power. The power output of gas turbines may be used for direct thrust as in pure jet engines, used for work and/or thrust as in fan jets and turboprops, or used for work as in electrical power generation.

Microturbines are a recent focus of gas turbine design. They can be described generally as being small scale and using a single stage of compression/expansion. They are usually recuperated designs that use a single shaft connecting the turbine to the compressor and power generator. They operate by drawing air from the atmosphere past the power generator for cooling purposes then compressing the air, passing it through one side of a recuperator, adding fuel, combusting the mixture, expanding the combustion gases through a turbine then passing them through the other side of the recuperator before release to the atmosphere. The present discussion will focus on microturbines that follow this described operation but it will be apparent to one experienced in the art that what is taught can be applied to other turbine designs.

Many turbine systems used for power generation are operated at constant speed. For large turbines constant speed operation may be selected to match the desired speed of the generator which needs to maintain a constant frequency of output power. Using a constant speed also ensures that the compressor operates in a known regime and avoids surge conditions. Microturbines have an additional reason for constant speed operation since they may be operating above a natural vibration frequency of the shaft. Maintaining a constant speed of operation ensures that uncontrolled vibration is never encountered.

Microturbines are small-scale systems and normally operate at high rpm. Using single-stage operation it is found that the compressor will typically absorb over two-thirds of the power produced by the turbine. In these conditions a recuperator is necessary to recover sufficient turbine exhaust energy to make the efficiency acceptable. It should be noted that energy added to the working gas flow is incremental to the internal energy of the working gas and further, that mass is added to the working gas with the addition of fuel. It is an implicit assumption that the input of energy into the system is a control variable through the control of fuel flow. Although large scale turbine systems using multiple compressor stages and intercoolers can achieve overall power efficiencies of about 40%, single-stage recuperated microturbines will typically achieve about 26% overall power efficiency at full power production with a 900°C turbine inlet temperature (TiT).

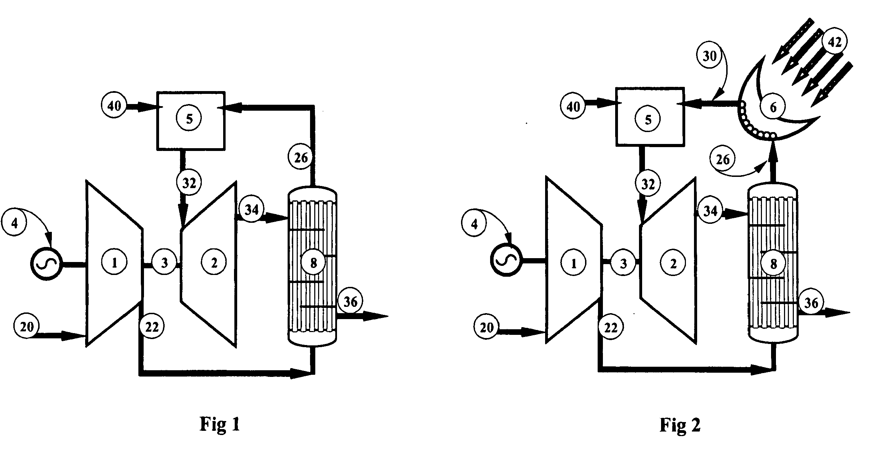

A prior art microturbine arrangement is shown in Fig 1. Air, used as working fluid (20), is drawn into compressor (1), sometimes across power generator (4) to effect cooling. Working fluid (22) exits compressor (1) at a higher pressure and temperature and is directed to the first side of recuperator (8). High-pressure working fluid (22) is indirectly heated by heat exchange with turbine exhaust (34) in a recuperator (8) and exits the recuperator (8) at a higher temperature as high-pressure working fluid (26) which is directed into combustor (5). Fuel (40) is added to combustor (5) and burned to increase the temperature of the mixture of working fluid (26) and fuel (40) which exits combustor (5) as hot, high-pressure working fluid (32) and is directed into turbine (2). High-pressure, hot working fluid (32) expands through turbine (2) releasing work into shaft (3) and exits turbine (2) as low-pressure, hot turbine exhaust (34). Heat is transferred from low-pressure, hot turbine exhaust (34) to high-pressure working fluid (22) in recuperator (8), the low pressure exhaust 34 being arranged in counter-flow to the high pressure working fluid (22) in the recuperator 8. Work released into shaft (3) serves to supply the parasitic work required by compressor (1) and excess work is used to drive power generator (4).

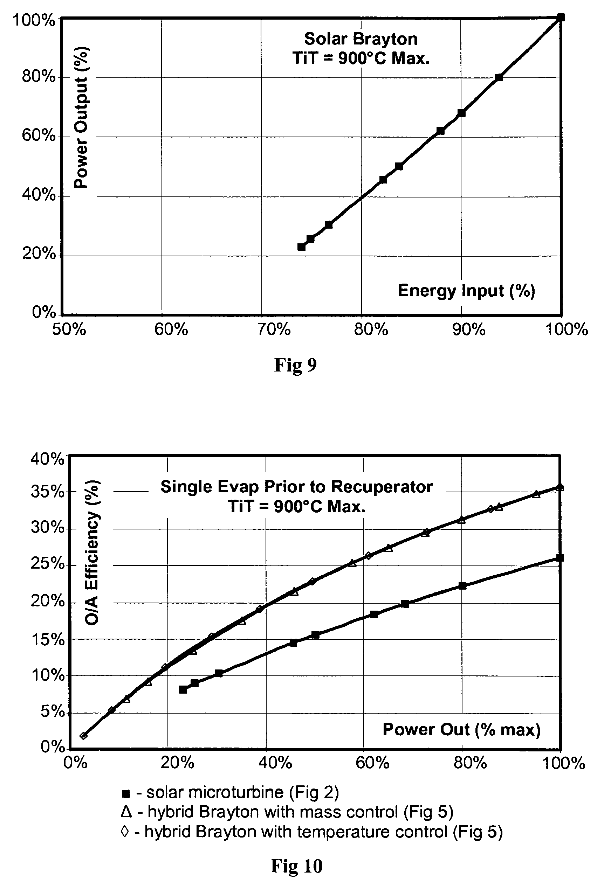

It is noted that overall power efficiency drops rapidly as energy input is reduced. Operating a microturbine at 50% power will cause the overall efficiency to drop to about 15½% efficiency. This results in 83½% of the full energy input capacity being required to maintain half power output. In fact this microturbine requires almost 70% of its full energy input capacity just to be self-sustaining without producing any output power. This is strictly due to the high percentage of energy used to operate the compressor at full power and operating at constant speed which requires a constant parasitic energy requirement. This limits the usefulness of a microturbine for applications in which full power is not always needed or can be tolerated. The small turndown range is revealed in Fig 9.

A solar application of the Brayton cycle has been proposed and development work implemented by Solhyco (http://www.greth.fr/solhyco/public/solhyco.php#sol4). In this case compressed working fluid (26) leaving recuperator (8) is directed to solar collector (6) before entering combustor (5). This arrangement is shown in Fig 2 and operates in the same manner as the microturbine shown in Fig 1 with added solar energy (42) input into working fluid (26) in solar collector (6). For both the microturbine shown in Fig 1 and the solar microturbine shown in Fig 2 there is a limit temperature for working fluid (32) entering turbine (2) which represents the maximum temperature allowed due to equipment restrictions.

In an ideal application, the temperature leaving solar collector (6) would be sufficient to be used in the turbine without added energy in combustor (5) and this will be the assumed case for these discussions. The solar microturbine arrangement of Fig 2 differs from the microturbine arrangement of Fig 1 only in that addition of solar energy (42) in solar collector (6) does not add mass to the working gas flow. For all practical purposes added solar energy (42) is independent of the temperature of working fluid (26). All of the turndown limitations discussed for the microturbine also applies to the solar microturbine as well.

When operating at maximum solar energy input capacity for the microturbine system with a TiT of 900°C, the compressor will absorb about 68% of the turbine power produced and the microturbine system will operate at an efficiency of 26%. As power output (4) reduces, the parasitic load of compressor (1) remains constant and thus represents a larger portion of the total power produced by turbine (2). The efficiency reduces rapidly since the parasitic compressor load represents an increasing portion of the total turbine power.

The turndown issue for the solar microturbine shown in Fig 2 is more influential than for the microturbine shown in Fig 1 since, in practice, it is difficult to design and maintain the maximum energy input through a solar collector. The implicit understanding of microturbine operation is that fuel input is a control variable and thus efficiency is the primary concern of microturbine operation. However in the solar application we find that the energy input is determined by conditions independent of the solar microturbine system. In this case the primary operational concern is the power output as compared to the energy input. Fig 9 indicates the level of energy input required to produce output power. If the energy input drops by 25% then the power output drops by almost 75% and to an efficiency of 9%. If the solar collector energy drops by 35% then the Brayton system ceases to operate. In practice, solar collectors vary much more than 35% from morning to night, through seasons, with changes in atmospheric conditions and under passing clouds. The additional problem is that solar input energy greater than the 100% design could result in a TiT in excess of material restrictions.

The large drop in power production and efficiency associated with a drop of solar energy means that a practical application would need to augment operation with fuel input to maintain reasonable power production thus making the system a solar-assisted power converter.

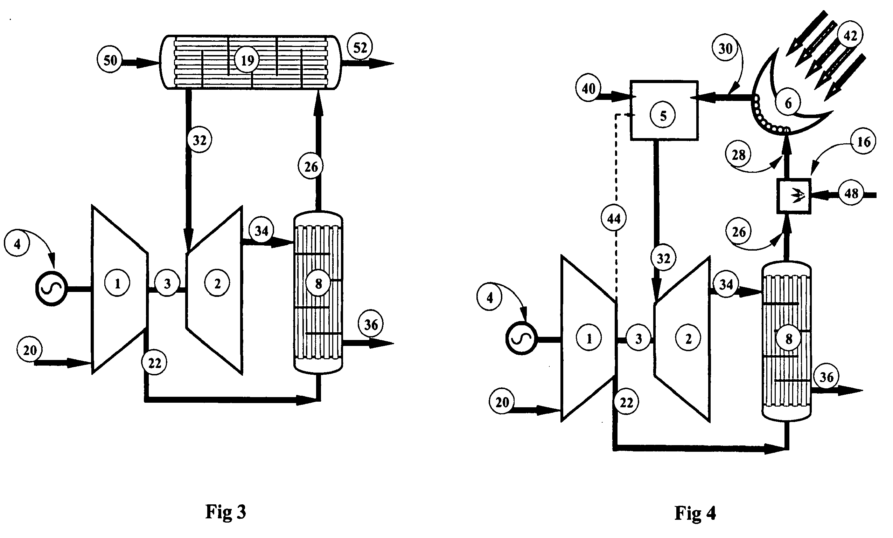

An externally heated application of the Brayton cycle has been proposed many times in the past see e.g US-A-6 321 539. An other example of such a power generation approach is the BG100 system developed by Talbotts Biomass Energy Systems Limited of Stafford, UK (http://www.talbotts.co.uk/bgen.htm). This external Brayton cycle arrangement is shown in Fig 3. In this case compressed working fluid (26) leaving recuperator (8) is directed to heater (19) and heated to become working fluid (32) by indirect energy transfer which cools external hot fluid (50) to become external cool fluid (52). As with the microturbine shown in Fig 1 and the solar microturbine shown in Fig 2 there is a limit temperature for working fluid (32) entering turbine (2) which represents the maximum temperature allowed due to equipment limitations. In most practical applications of the external Brayton cycle this temperature restriction is more limiting due to the greater temperature of external hot fluid (50) necessary to maintain heat transfer to working fluid (32), the greater amount of material exposed to these limit temperatures, and the cost associated with specialty materials capable of handling such high temperature.

It should be noted in the arrangement shown in Fig 3 that the temperature of external cool fluid (52) must be higher than the temperature of compressed working fluid (26) entering heater (19) and thus the amount of energy transferred is not independent of the temperatures of operation. The temperature of external hot fluid (50) is limited and thus the energy input into heater (19) can only be increased by the increased flow of external hot fluid (50). Since the flow of working fluid (26) is fixed by constant speed of compressor (1) then adding energy into the system requires a greater temperature of working fluid (32) but is limited by the temperature of external hot fluid (50) which, in itself, is limited. It is quickly found that increasing energy input into heater (19) results in very little additional energy entering working fluid (26) with most leaving in external cool fluid (52). Of the additional energy which does enter working fluid (26) only a portion is converted to work in turbine (2) with the balance exiting as increased temperature of turbine exhaust (34). This results in an increase in temperature in working fluid (26) entering heater (19) which, in turn, reduces the temperature difference with external cool fluid (52) and reduces the transfer of energy into working fluid (26). The competing effects of increased flow of external hot fluid (50) and increased temperature of external cool fluid (52) creates a limit in the amount of energy that can be transferred in heater (19). The power production by the arrangement shown in Fig 3 is less than half of the capacity of the original microturbine equipment for the same compression and flow rates and it has an overall efficiency that is a fraction of the microturbine shown in Fig 1.

EP 1,362,984 discloses a gas turbine engine comprising a first compressor, a combustor and a first turbine arranged in flow series. The first turbine is arranged to drive the first compressor. The first compressor has variable inlet guide vanes and the first turbine has variable inlet guide vanes. One or more valves are opened to allow water to be injected into the engine upstream of the first compressor, within the compressor, between the first compressor and a heat exchanger and within the heat exchanger respectively, such that the water injection rate at the respective positions is controlled to maximise power boost. EP 1,362,984 is however not concerned with optimizing energy from an unpredictable supply such as a solar energy source.

It is an object of the present invention to provide such an improved apparatus.

### SUMMARY OF THE INVENTION

According to the present invention there is provided a method of converting energy into electricity according to claim 1.

The invention also provides an apparatus for converting energy into electricity according to claim 8.

### BRIEF DESCRIPTION OF THE DRAWINGS

Figs 1 to 3 (described above) are schematic diagrams of prior art single-stage microturbines with recuperator.
Fig 4 is a schematic diagram of a solar microturbine according to a first embodiment of the invention that applies evaporative cooling of the working fluid immediately after the recuperator.
Fig 5 is a schematic diagram of a solar microturbine according to a second embodiment of the invention that applies evaporative cooling of the working fluid immediately prior to the recuperator.
Fig 6 is a schematic diagram of a solar microturbine according to a third embodiment of the invention that applies evaporative cooling of the working fluid both before the recuperator and after the recuperator.
Fig 7 is a schematic diagram of a solar microturbine according to a fourth embodiment of the invention that applies evaporative cooling of the working fluid and uses turbine exhaust energy to pre-heat the evaporative fluid.
Fig 8 is a schematic diagram of a solar microturbine according to a fifth embodiment of the invention that applies evaporative cooling of the working fluid and captures the working fluid into a closed cycle.
Fig 9 is a graph describing power production as a function of energy input for a microturbine shown in Fig 1 or solar microturbine shown in Fig 2.
Fig 10 is a graph of overall efficiency as a function of power produced with a comparison between the solar microturbine shown in Fig 2 and the hybrid Brayton cycle shown in Fig 5 with both temperature control and evaporative fluid mass flow control.
Fig 11 is a graph of overall efficiency as a function of power produced with a comparison between the solar microturbine shown in Fig 2 and the hybrid Brayton cycle shown in Fig 4 with both temperature control and evaporative fluid mass flow control.
Fig 12 is a graph of overall efficiency as a function of power produced with a comparison between the solar microturbine shown in Fig 2 and the hybrid Brayton cycle shown in Fig 6 and with a variation in the ratio of evaporative cooling before and after the recuperator.
Fig 13 is a graph of power output as a function of energy input showing the effects of excess input energy by limiting the output power to 100%.
Fig 14 is a graph of overall efficiency as a function of energy input including the effects of excess input energy with a comparison between the solar microturbine shown in Fig 2 and the hybrid Brayton cycle shown in Fig 6 and with a variation in the ratio of evaporative cooling before and after the recuperator.

In the drawings the same reference numerals are used for the same or equivalent components.

### DETAILED DESCRIPTION OF THE EMBODIMENTS

Thermodynamic analysis of the microturbine shown in Fig 1 is substantially equal to the thermodynamic analysis of the solar microturbine shown in Fig 2 which reveals a maximum overall efficiency of 26% and a turndown characteristic shown in Fig 9. Extension of this graph indicates that a 35% reduction of input energy would reduce the output power to zero. Characteristics of the solar microturbine shown in Fig 2 will serve as the baseline of comparison for hybrid Brayton modifications taught by this patent disclosure. The following discussions made in comparison to the solar microturbine shown in Fig 2 will apply equally to effects on the microturbine shown in Fig 1.

The hybrid Brayton modification shown in Fig 4 includes adding water (48) into chamber (16) immediately after recuperator (8) to cause evaporative cooling of working fluid (26). The effect is a reduced temperature of working fluid (28) entering solar collector (6) which allows more solar energy (42) to be absorbed before reaching the limit temperature for working fluid (32) entering turbine (2). The added mass of water (48) passing through turbine (2) means less working fluid (20) needs to be drawn into compressor (1), less parasitic work from shaft (3) is required and compressor (1) can be physically smaller. Since less work in shaft (3) is required, turbine (2) can be physically smaller to supply the same net output power (4). A general limit of added water (48) is the mass that would bring working fluid (28) to 100% humidity although this limit can be exceeded in certain circumstances. For operation using input fuel (40), an optional bypass flow (44) of air can be used to feed combustor (5) directly should humidity levels of working fluid (30) adversely affect combustion.

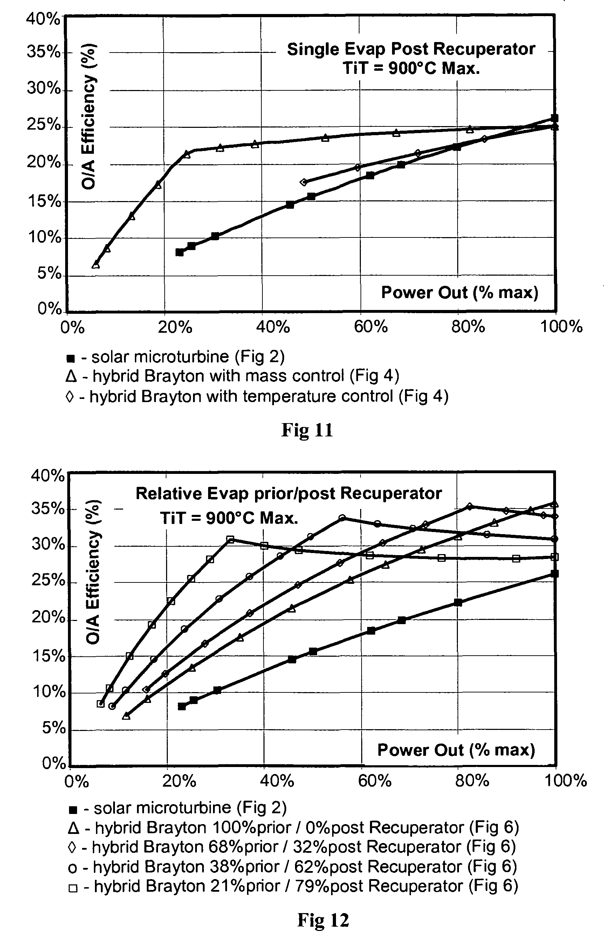

The hybrid Brayton system shown in Fig 4 will operate at lower levels of power output (4) when solar energy (42) input is reduced. Under reduced energy input conditions, mass of water (48) introduced into chamber (16) is reduced to maintain working fluid (30) at the limit temperature for turbine (2). Fig 11 shows the turndown effects of controlling the introduction of water (48) during reduced input of solar energy (42) as compared to reducing the temperature of working fluid (32) and with comparison to the solar microturbine baseline. When the mass flow of water (48) reaches zero during turndown, then the temperature of working fluid (32) is allowed to reduce. Maintaining a high overall efficiency during turndown is a significant system benefit of this hybrid Brayton modification.

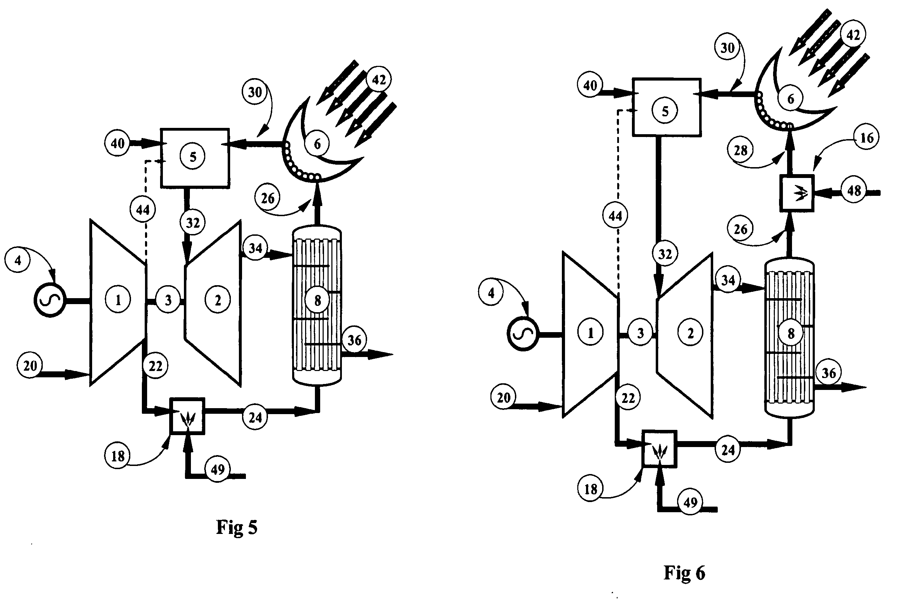

The hybrid Brayton modification shown in Fig 5 includes adding water (49) into chamber (18) immediately before recuperator (8) to cause evaporative cooling of working fluid (22). The effect is a reduced temperature of working fluid (24) entering recuperator (8) which allows more energy from turbine exhaust (34) to be transferred and recovered within the power cycle. The greater energy kept within the power cycle serves to increase the overall efficiency. Adding sufficient water (48) to bring working fluid (24) to 100% humidity will increase the overall efficiency by 38%; from about 26% to about 36%. The added mass of water (49) passing through turbine (2) means less working fluid (20) needs to be drawn into compressor (1), less parasitic work from shaft (3) is required and compressor (1) can be physically smaller. Since less work in shaft (3) is required, turbine (2) can be physically smaller to supply the same net output power (4).

The hybrid Brayton system shown in Fig 5 will operate at lower levels of power output (4) when solar energy (42) input is reduced. Under reduced energy input conditions, mass of water (49) introduced into chamber (18) is reduced to maintain working fluid (32) at the limit temperature for turbine (2). Alternatively under reduced energy input conditions, the mass of water (49) introduced into chamber (18) can be kept constant while allowing the temperature of working fluid (32) to reduce. Fig 10 shows the turndown effects of controlling the introduction of water (49) during reduction of solar energy (42) input as compared to reducing the temperature of working fluid (32) and with comparison to the solar microturbine baseline. Maintaining a greater overall efficiency at all levels of operation is a significant system benefit of this hybrid Brayton modification.

The hybrid Brayton modifications shown in Fig 6 includes adding water (49) into chamber (18) immediately before recuperator (8) to cause evaporative cooling of working fluid (22) and adding water (48) into chamber (16) immediately after recuperator (8) to cause evaporative cooling of working fluid (26). While maintaining the same net output power (4), a selection can be made of the relative amount of added water (49) compared to the amount of added water (48) to change the relative effects of overall efficiency increase and the increase in effective turndown range. Fig 12 reveals the effects of turndown when the ratio of water introduction is altered. When the added water (49) is reduced then the working fluid (20) is also reduced which lessens the parasitic work taken from shaft (3) by compressor (1) and results in the peak efficiency to be realized at a lower power setting. However the efficiency of power production reduces only slightly at maximum power setting from the power setting at peak efficiency. Thus the effective range of turndown is increased when added water (49) is minimized.

It is recognized that the hybrid Brayton modifications shown in Fig 4 and in Fig 5 are special cases of the general hybrid Brayton modification shown in Fig 6.

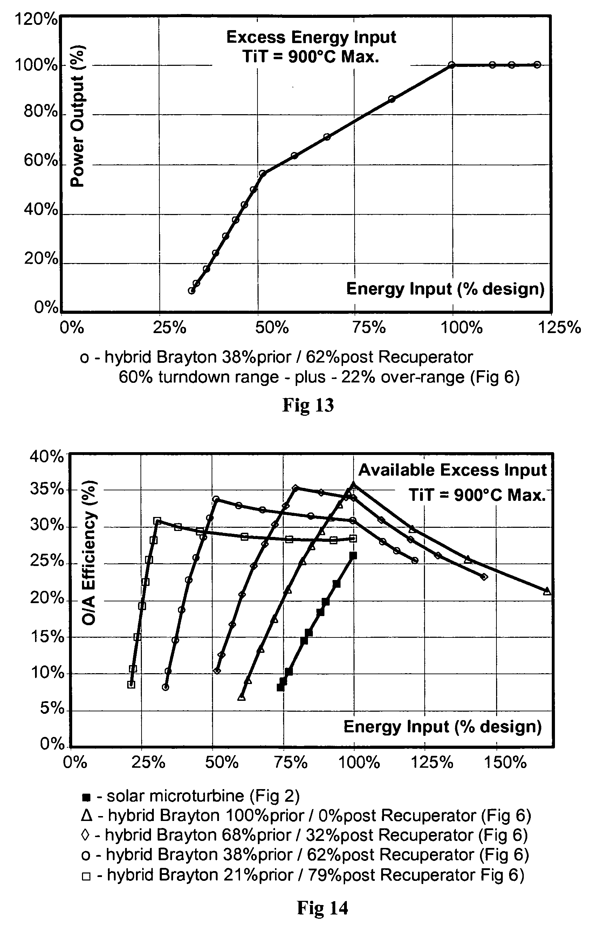

Fig 12 shows that water (48) is added at the upper turndown range to maintain the limit temperature of working fluid (32) until the maximum net output power (4) is reached. Fig 14 reveals that excessive input of solar energy (42) can be controlled by further increasing the mass input of water (48) to reduce the temperature of working fluid (32) to maintain, and not exceed, the maximum net output power (4). Fig 14 shows the amount of excess solar energy (42) that can be accommodated by hybrid Brayton systems of different evaporative cooling ratios. The system featured in Fig 13 is the arrangement shown in Fig 6 wherein a spray ratio of 38% is from added water (48) and 62% is from added water (49) at maximum power output. Further increasing the mass input of water (48) for the system shown will allow 22% excess solar energy (42) before working fluid (28) reaches 100% humidity. Input of solar energy (42) is highly variable and seldom available at a design maximum. This hybrid Brayton feature allows designing solar collector (6) at 80% maximum energy input with a continuous operation over a 60% reduction in solar input while still handling 22% of excess solar input.

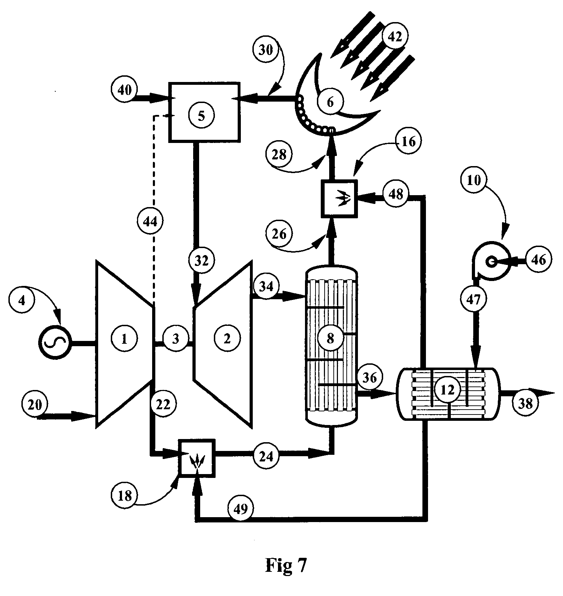

Fig 7 shows an enhancement of the hybrid Brayton system of Fig 6 wherein energy in turbine exhaust (36) exiting recuperator (8) is recovered in preheater (12). Supply water (46) to be used as evaporative fluid is pressurized in pump (10) to high-pressure water (47) feeding preheater (12). Thermal energy in turbine exhaust (36) is indirectly transferred into pressure water (47) to preheat added water (48) and added water (49). System efficiency is increased by the recovery of energy from turbine exhaust (36) and kept within the power cycle.

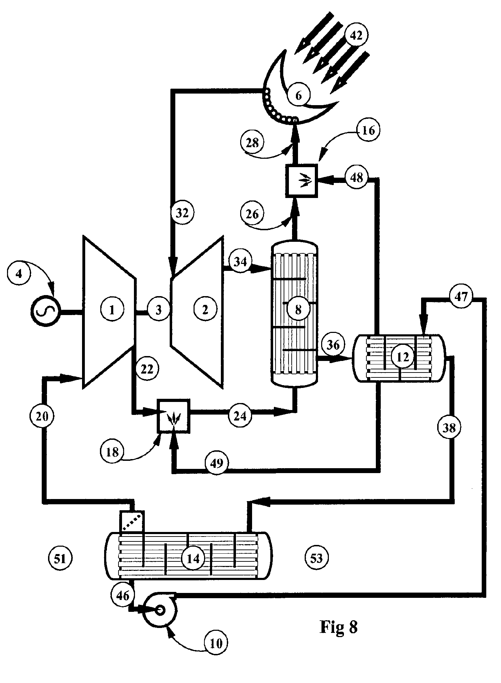

It is further recognized that the hybrid Brayton system can be operated in a closed loop arrangement. Fig 8 shows a closed loop application of the hybrid Brayton cycle shown in Fig 7. In this arrangement the working fluid can be a gas, other than air, that maintains its vapor state throughout the power cycle. Further, the evaporative fluid can be a liquid, other than water, that will evaporate and condense under the application conditions of the power cycle. Working fluid (20) is compressed by compressor (1) and increases in pressure and temperature to produce working fluid (22). Evaporative fluid (49) is added to working fluid (22) and evaporates to produce working fluid (24) at a lesser temperature than working fluid (22) but with a mass flow that is the sum of mass flow of working fluid (22) and mass flow of evaporative fluid (49). Working fluid (24) enters the first side of recuperator (8) and is indirectly heated to produce working fluid (26). Evaporative fluid (48) is added to working fluid (26) and evaporates to produce working fluid (28) at a lesser temperature than working fluid (26) but with a mass flow that is the sum of mass flow of working fluid (26) and mass flow of evaporative fluid (48). Working fluid (28) enters solar collector (6) and is heated by solar energy (42) to produce working fluid (32) that is at a higher temperature than working fluid (28). Working fluid (32) enters turbine (2) where it expands and releases work to shaft (3). Turbine exhaust (34) exits turbine (2) at a lower pressure and enthalpy than working fluid (32) and is fed into the second side of recuperator (8). Thermal energy from turbine exhaust (34) transfers into working fluid (24) and reduces the temperature of turbine exhaust (36) as compared to turbine exhaust (34). Turbine exhaust (36) enters the first side of preheater (12) and reduces temperature further to exit as turbine exhaust (38). Turbine exhaust (38) is fed into the second side of cooler (14) in which evaporative fluid (46) condenses and is extracted to feed pump (10). Working fluid (20) leaves cooler (14) at a lower temperature and generally 100% saturated with evaporative fluid in vapor condition. Coolant (51) enters the first side of cooler (14) and exits at the higher temperature of coolant (53) due to absorbing energy from turbine exhaust (38). Evaporative fluid (47) leaves pump (10) at higher pressure and is fed into second side of preheater (12) where it increases in temperature and exits as evaporative fluid (48) and evaporative fluid (49). Work that was released to shaft (3) is supplied as parasitic power to compressor (1) plus net output power (4).

The hybrid Brayton cycle opens new application potential for microturbines. For microturbines as shown in Fig 1 the efficiency reduction at lower power levels makes the system much more expensive for load-following applications. When operated under continuous maximum power output, it is found that the peak 26% efficiency may or may not be economically justified. When not connected to a power grid or other power load that can ensure full power operation, it is found that microturbines will have a turndown of only 30% based on maintaining an overall efficiency over 20%. The reduced efficiency will often mean that a microturbine is uneconomical for load-following applications. Applying the hybrid Brayton modification as shown in Fig 6 but without solar collector (6), offers operational flexibility to match the consumption pattern of the user. When operated under continuous maximum power output, the hybrid Brayton microturbine will produce a peak efficiency of 36% which makes it much easier to economically justify. When not connected to a power grid or other power load that can ensure full power operation, the hybrid Brayton microturbine can extend the turndown range to over 75% based on maintaining an overall efficiency over 20%. A balance between the maximum efficiency increase of full power operation and the increased turndown capability can be designed into the hybrid Brayton system which allows optimizing the equipment to the consumption pattern of the user.

The hybrid Brayton cycle opens new application potential for solar microturbines. For solar microturbines as shown in Fig 2 the efficiency reduction at lower energy input levels makes the system impractical for a stand-alone solar energy system.. Solar collectors are difficult to design at a precise maximum energy input level. Excess energy input into the solar microturbine shown in Fig 2 would result in higher temperature of working fluid (30) carrying it beyond the limit temperature for entering turbine (2). Insufficient energy input into the solar microturbine shown in Fig 2 would result in a large drop in power production. A 25% drop in solar energy input would result in a 75% drop in power output and a 35% drop in solar energy input would result in the solar microturbine ceasing to function. A practical approach to this situation is to inject fuel (40) into combustor (5) to maintain power output. Since a practical solar system will typically operate at a solar input level well below its maximum then this approach means the system becomes a solar-assisted microturbine rather than a solar microturbine.

Applying the hybrid Brayton modification as shown in Fig 6 but without combustor (5), offers operational flexibility to create a stand-alone solar microturbine. It is recognized that solar energy input can vary significantly from morning to night, over changing seasons, in various atmospheric conditions and through cloud interference. The hybrid Brayton modification will allow relatively efficient power production over a range of 75% reduction in solar energy input and continued operation up to a 90% loss of input solar energy. Further the hybrid Brayton solar microturbine system can be designed for full power output at a design point that is less than full solar energy input, capable of tolerating an excessive solar energy input while maintaining full power output and continue producing reasonable power output if the solar energy input reduces. For instance a hybrid Brayton solar system could be designed to operate at 80% of the expected maximum solar energy input. This system would continue to supply full power output, without damage, if the solar energy input exceeded the design level by up to 20%. This system would also provide power output above a 20% overall efficiency if the solar energy input reduced by 60% and continue to operate until the solar energy input reduced by 70%. This makes the hybrid Brayton solar microturbine system practical for stand-alone operation.

In summary, one or more embodiments of the invention teach a hybrid Brayton modification that:
- overcomes the limitations of small turndown range associated with the microturbine shown in Fig 1 and the solar microturbine shown in Fig 2.
   -- increases the efficiency of the power cycle.
- for a system with a temperature independent energy input, enables a balance to be made to maximize efficiency increases while limiting the increased range of turndown or limiting the efficiency increase while increasing the turndown range.
- handles excess solar energy input to the system.

In any application of these hybrid Brayton modifications, the benefits are realized by optimizing equipment.

The invention is not limited to the embodiments described herein which may be modified or varied without departing from the scope of the invention as set out in the following claims.

## Claims

1. A method of converting energy into electricity using an externally heated Brayton cycle, comprising steps of:
compressing a gaseous working fluid (20) in a compressor (1) to form a high-pressure working fluid (22);
heating the high-pressure working fluid (22) in a recuperator (8) by heat exchange with a low-pressure working fluid (34) emerging from a turbine (2);
adding energy to the recuperated high-pressure working fluid (26) to increase the temperature and enthalpy of the working fluid by indirect heat transfer from an external source of heat comprising solar energy (42);
expanding the recuperated high-pressure working fluid (32) through the turbine (2) to form said low-pressure working fluid (34),
using the turbine (2) to generate electricity (4);
cooling the low-pressure working fluid (34) emerging from the turbine (2) in the recuperator (8); and
lowering the temperature and increasing the mass of the high-pressure working fluid (22;26) after leaving the compressor (1), and/or after leaving the recuperator (8), by introducing an evaporative fluid (49;48) to produce evaporative cooling.

2. The method claimed in claim 1, wherein the evaporative fluid (48, 49) is introduced into the working fluid (22, 26) both after leaving the compressor (1) and after leaving the recuperator (8).

3. The method claimed in claim 1, wherein the evaporative fluid (48) is preheated (12) by the low-pressure working fluid (36) emerging from the recuperator (8) before being introduced into the high-pressure working fluid (22,26) leaving the recuperator (8).

4. The method claimed in claim 1, wherein the working fluid and the evaporative fluid is captured in a closed cycle by:
cooling the low-pressure working fluid (38) in a cooler (14) after having been used to preheat the evaporative fluid (47) in a pre-heater stage (12),
condensing evaporative fluid (46) from the low-pressure working fluid (38) during cooling;
separating the evaporative fluid (46) from the low pressure working fluid (38);
pressurizing the evaporative fluid (46);
directing the pressurized evaporative fluid (47) to the pre-heater stage (12) to maintain a closed circuit; and
directing the low-pressure working fluid (20) to the compression stage (1) to maintain a closed system.

5. The method claimed in claim 1, wherein the gaseous working fluid (20) is atmospheric air and the evaporative fluid (48) is water.

6. The method claimed in claim 4 wherein the working fluid is a gas other than air.

7. The method claimed in claim 4 or 6, wherein the evaporative fluid is a liquid other than water.

8. An apparatus for converting energy into electricity using an externally heated Brayton Cycle, comprising:
a compressor (1) for pressurizing a gaseous working fluid (20) to form a high-pressure working fluid (22);
a recuperator (8) to heat the high-pressure working fluid (22) by heat exchange with a low-pressure working fluid (34) leaving a turbine (2);
a solar energy source (42) comprising an external source of heat for increasing the temperature and enthalpy of the recuperated high-pressure working fluid (26) by indirect heat transfer;
a turbine (2) for expanding the recuperated high-pressure working fluid (32) heated by the energy source to form said low-pressure working fluid (34);
an electrical generator (4) coupled to the turbine (2); and
means for conveying the low-pressure working fluid (34) emerging from the turbine (2) to the recuperator (8);
the apparatus further comprising means (18;16) for lowering the temperature and increasing the mass of the high-pressure working fluid (22,26) after leaving the compressor (1), and/or after leaving the recuperator (8), by introducing an evaporative fluid (49;48) to produce evaporative cooling.

## Patentansprüche

1. Verfahren zum Umwandeln von Energie in elektrischen Strom unter Verwendung eines extern erwärmten Brayton-Kreisprozesses, das folgende Schritte umfasst:
Verdichten eines gasförmigen Arbeitsfluids (20) in einem Verdichter (1), um ein Hochdruck-Arbeitsfluid (22) zu bilden;
Erwärmen des Hochdruck-Arbeitsfluids (22) in einem Rekuperator (8) durch Wärmeaustausch mit einem aus einer Turbine (2) austretenden Niederdruck-Arbeitsfluid (34);
Hinzufügen von Energie zu dem rekuperierten Hochdruck-Arbeitsfluid (26), um Temperatur und Enthalpie des Arbeitsfluids durch indirekte Wärmeübertragung von einer Sonnenenergie (42) umfassenden externen Quelle von Wärme zu erhöhen;
Expandieren des rekuperierten Hochdruck-Arbeitsfluids (32) durch die Turbine (2) hindurch, um das Niederdruck-Arbeitsfluid (34) zu bilden,
Verwenden der Turbine (2), um elekrischen Strom (4) zu erzeugen;
Abkühlen des aus der Turbine (2) austretenden Niederdruck-Arbeitsfluids (34) in dem Rekuperator (8); und
Senken der Temperatur und Erhöhen der Masse des Hochdruck-Arbeitsfluids (22; 26) nach dem Verlassen des Verdichters (1) und/oder nach dem Verlassen des Rekuperators (8) durch Einbringen eines Verdunstungsfluids (49; 48), um Verdunstungskühlung zu produzieren.

2. Verfahren nach Anspruch 1, wobei das Verdunstungsfluid (48, 49) sowohl nach dem Verlassen des Verdichters (1) als auch nach dem Verlassen des Rekuperators (8) in das Arbeitsfluid (22, 26) eingebracht wird.

3. Verfahren nach Anspruch 1, wobei das Verdunstungsfluid (48) von dem aus dem Rekuperator (8) austretenden Niederdruck-Arbeitsfluid (36) vorgewärmt (12) wird, bevor es in das den Rekuperator (8) verlassenden Hochdruck-Arbeitsfluid (22, 26) eingebracht wird.

4. Verfahren nach Anspruch 1, wobei das Arbeitsfluid und das Verdunstungsfluid in einem geschlossenen Kreislauf gefangen werden, indem:
das Niederdruck-Arbeitsfluid (38) in einem Kühler (14) abgekühlt wird, nachdem es verwendet wurde, um das Verdunstungsfluid (47) in einer Vorwärmstufe (12) vorzuwärmen,
das Verdunstungsfluid (46) während des Abkühlens aus dem Niederdruck-Arbeitsfluid (38) kondensiert wird;
das Verdunstungsfluid (46) von dem Niederdruck-Arbeitsfluid (38) getrennt wird;
das Verdunstungsfluid (46) unter Druck gesetzt wird;
das unter Druck stehende Verdunstungsfluid (47) zu der Vorwärmstufe (12) geleitet wird, um einen geschlossenen Kreislauf aufrechtzuerhalten; und
das Niederdruck-Arbeitsfluid (20) zu der Verdichtungsstufe (1) geleitet wird, um ein geschlossenes System aufrechtzuerhalten.

5. Verfahren nach Anspruch 1, wobei es sich bei dem gasförmigen Arbeitsfluid (20) um Atmosphärenluft handelt und es sich bei dem Verdunstungsfluid (48) um Wasser handelt.

6. Verfahren nach Anspruch 4, wobei es sich bei dem Arbeitsfluid um ein anderes Gas als Luft handelt.

7. Verfahren nach Anspruch 4 oder 6, wobei es sich bei dem Verdunstungsfluid um eine andere Flüssigkeit als Wasser handelt.

8. Vorrichtung zum Umwandeln von Energie in elektrischen Strom unter Verwendung eines extern erwärmten Brayton-Kreisprozesses, die Folgendes umfasst:
einen Verdichter (1) zum Unterdrucksetzen eines gasförmigen Arbeitsfluids (20), um ein Hochdruck-Arbeitsfluid (22) zu bilden;
einen Rekuperator (8) zum Erwärmen des Hochdruck-Arbeitsfluids (22) durch Wärmeaustausch mit einem eine Turbine (2) verlassenden Niederdruck-Arbeitsfluid (34);
eine Sonnenenergiequelle (42), umfassend eine externe Quelle von Wärme zum Erhöhen von Temperatur und Enthalpie des rekuperierten Hochdruck-Arbeitsfluids (26) durch indirekte Wärmeübertragung;
eine Turbine (2) zum Expandieren des von der Energiequelle erwärmten rekuperierten Hochdruck-Arbeitsfluids (32), um das Niederdruck-Arbeitsfluid (34) zu bilden;
einen an die Turbine (2) gekoppelten elektrischen Stromerzeuger (4); und
Mittel zum Fördern des aus der Turbine (2) austretenden Niederdruck-Arbeitsfluids (34) zu dem Rekuperator (8);
wobei die Vorrichtung weiter Mittel (18; 16) zum Senken der Temperatur und Erhöhen der Masse des Hochdruck-Arbeitsfluids (22, 26) nach dem Verlassen des Verdichters (1) und/oder nach dem Verlassen des Rekuperators (8) durch Einbringen eines Verdunstungsfluids (49; 48) zum Produzieren von Verdunstungskühlung umfasst.

## Revendications

1. Procédé destiné à convertir de l'énergie en électricité, à l'aide d'un cycle de Brayton chauffé de l'extérieur, comprenant les étapes suivantes :
comprimer un fluide de travail gazeux (20) dans un compresseur (1) pour former un fluide de travail à haute pression (22) ;
chauffer le fluide de travail à haute pression (22) dans un récupérateur (8) par échange thermique avec un fluide de travail à basse pression (34) sortant d'une turbine (2) ;
ajouter de l'énergie au fluide de travail à haute pression récupéré (26) pour augmenter la température et l'enthalpie du fluide de travail par transfert thermique indirect depuis une source de chaleur extérieure comprenant de l'énergie solaire (42) ;
dilater le fluide de travail à haute pression récupéré (32) à travers la turbine (2) pour former ledit fluide de travail à basse pression (34) ;
utiliser la turbine (2) pour générer de l'électricité (4) ;
refroidir le fluide de travail à basse pression (34) sortant de la turbine (2) dans le récupérateur (8) ; et
réduire la température et augmenter la masse du fluide de travail à haute pression (22 ; 26) une fois sorti du compresseur (1), et/ou une fois sorti du récupérateur (8) en introduisant un fluide évaporatif (49 ; 48) pour produire un refroidissement par évaporation.

2. Procédé selon la revendication 1, où le fluide évaporatif (48, 49) est introduit dans le fluide de travail (22, 26) une fois sorti du compresseur (1) et aussi une fois sorti du récupérateur (8).

3. Procédé selon la revendication 1, où le fluide évaporatif (48) est préchauffé (12) par le fluide de travail à basse pression (36) sortant du récupérateur (8) avant d'être introduit dans le fluide de travail à haute pression (22, 26) sortant du récupérateur (8).

4. Procédé selon la revendication 1, où le fluide de travail et le fluide évaporatif sont capturés en un cycle fermé par les étapes suivantes :
refroidir le fluide de travail à basse pression (38) dans un refroidisseur (14) une fois qu'il a servi à préchauffer le fluide évaporatif (47) dans un étage préchauffeur (12),
condenser le fluide évaporatif (46) depuis le fluide de travail à basse pression (38) pendant le refroidissement ;
séparer le fluide évaporatif (46) du fluide de travail à basse pression (38) ;
pressuriser le fluide évaporatif (46) ;
diriger le fluide évaporatif pressurisé (47) vers l'étage préchauffeur (12) pour conserver le circuit fermé ; et
diriger le fluide de travail à basse pression (20) vers l'étage de compression (1) pour conserver le système fermé.

5. Procédé selon la revendication 1, où le fluide de travail gazeux (20) est de l'air atmosphérique et le fluide évaporatif (48) est de l'eau.

6. Procédé selon la revendication 4, où le fluide de travail est un gaz autre que l'air.

7. Procédé selon la revendication 4 ou 6, où le fluide évaporatif est un liquide autre que l'eau.

8. Appareil destiné à convertir de l'énergie en électricité à l'aide d'un cycle de Brayton chauffé de l'extérieur, comprenant :
un compresseur (1) destiné à pressuriser un fluide de travail gazeux (20) pour former un fluide de travail à haute pression (22) ;
un récupérateur (8) destiné à chauffer le fluide de travail à haute pression (22) par échange thermique avec un fluide de travail à basse pression (34) sortant d'une turbine (2) ;
une source d'énergie solaire (42) comprenant une source extérieure de chaleur destinée à augmenter la température et l'enthalpie du fluide de travail à haute pression récupéré (26) par transfert thermique indirect ;
une turbine (2) destinée à dilater le fluide de travail à haute pression récupéré (32) chauffé par la source d'énergie pour former ledit fluide de travail à basse pression (34) ;
un générateur électrique (4) couplé à la turbine (2) ; et
un moyen de transporter le fluide de travail à basse pression (34) sortant de la turbine (2) jusqu'au récupérateur (8) ;
l'appareil comprenant de plus un moyen (18 ; 16) de réduire la température et augmenter la masse du fluide de travail à haute pression (22, 26) une fois sorti du compresseur (1) et/ou une fois sorti du récupérateur (8), en introduisant un fluide évaporatif (49 ; 48) pour produire un refroidissement par évaporation.
